# EUROPEAN PATENT APPLICATION

(11) **EP 4 541 557 A1**
(43) Date of publication of application: **23.04.2025**
(21) Application number: 24181390.6
(22) Date of filing: 11.06.2024
(51) Int. Cl.: B29C 63/02

(54) **FILM-STICKING BOX FOR ELECTRONIC DEVICE**

(30) Priority: 20.10.2023 CN 202322817655 U
(71) Applicant: Dongguan Pinjia Technology Co., Ltd., Dongguan (CN)
(72) Inventor: Liu, Xiaofen, Dongguan (CN)
(74) Representative: Zaboliene, Reda

(57) **Abstract**

The present disclosure discloses a film-sticking box for an electronic device, including a box body. A receiving slot for receiving an electronic device and a film-sticking assembly is defined in the box body, and a shape of the receiving slot is adapted to a shape of the electronic device; the box body is connected to an enclosing shell which includes a bottom plate fixedly connected to a bottom of the box body and a cover plate reversibly connected to the bottom plate. During the film-sticking process, the cover plate covers on the box body; in detail, the bottom plate is connected to a connecting plate, and the cover plate is reversibly connected to the bottom plate through the connecting plate. The positioning box is mounted around the enclosing shell to secure the position of the cover plate, such that the cover plate cannot be opened.

## Description

### CROSS-REFERENCE TO RELATED APPLICATIONS

The present disclosure claims the priority of Chinese Invention Application No. CN202322817655.5, filed on October 20,2023, the entire contents of which are hereby incorporated by reference.

### FIELD

The present disclosure relates to the technical field of auxiliary components for electronic devices, and more particularly, to a film-sticking box for an electronic device.

### BACKGROUND

With the advent of the Internet age, electronic products such as tablet computers and electronic devices have become indispensable tools in people's lives. However, a screen of the electronic device is easily scratched or even broken, which affects the displaying effect and aesthetics of the screen. Since it requires a lot of money and time to replace the screen, the user usually attaches a protective film on the screen to protect the screen. However, if the film is not attached properly, it can result in many bubbles between the protective film and the screen; in addition, the bubbles cannot be removed under a too-large pressure which otherwise may cause damage of the screen. Therefore, the skills required for attaching the film are very high. Most users attach the film to the electronic device through ordinary film-sticking methods or semi-simple film-sticking devices. However, the protective film may be tiltly attached, or there may be a lot of bubbles and dust between the protective film and the screen. In order to solve this problem, fully-enclosed film-sticking boxes have appeared on the market to ensure a dust-free film-sticking environment.

A Chinese utility model patent CN216375160U discloses a film-sticking box for attaching a film to an electronic device. The film-sticking box includes a box body defining a film positioning surface and a placement surface. The film positioning surface is arranged obliquely relative to the placement surface. The box body includes a connecting member and a lower housing. The lower housing accommodates the connecting member and is detachably connected to the connecting member. The connecting member can accommodate the electronic device. The surface of the connecting member connected to the electronic device is defined as the placement surface. The film-sticking box can create a dust-free film-sticking environment for the electronic device, and the box body can fix a position of a tempered film on the screen of the electronic device, improving the film-sticking effect.

The above-mentioned utility model fixes the tempered film on the screen of the electronic device through a cover of the box body, which is convenient for the film-sticking. However, when the film is attached, it is necessary to pull a release film out of the box body to allow the tempered film to be attached to the screen of the electronic device. During the process of pulling the release film, the cover of the box body may be easily opened, which can cause the position of the tempered film to shift and affect the film-sticking effect.

### SUMMARY

In order to solve the above technical problems, the present disclosure provides a film-sticking box for an electronic device.

The technical solution of the present disclosure provides a film-sticking box for an electronic device, including a box body forming a receiving slot for receiving an electronic device and a film-sticking assembly, and a shape of the receiving slot being adapted to a shape of the electronic device; wherein the box body is connected to an enclosing shell, the enclosing shell includes a bottom plate fixedly connected to a bottom of the box body and a cover plate reversibly connected to the bottom plate; the bottom plate is connected to a connecting plate, and the cover plate is reversibly connected to the bottom plate through the connecting plate, and a positioning box is mounted around the enclosing shell.

In an embodiment, the enclosing shell includes three surfaces which are the bottom plate, the cover plate, and the connecting plate, the cover plate covers the box body, and a positioning block is arranged in the receiving slot.

In an embodiment, the positioning box is a rectangular box with one opening formed by surrounding at least one box wall, and a buckle portion is arranged in the positioning box and is a gap formed in an edge of the opening of the positioning box .

In an embodiment, the film-sticking assembly includes a tempered film, a positioning film, a release film, and a handle, the release film is removably attached to one side of the tempered film, the handle is fixedly connected to the release film, a length of the handle is greater than a length of the release film, the positioning film is removably attached to the other side of the tempered film, and at least one positioning hole is defined in the positioning film.

In an embodiment, the film-sticking assembly is arranged at the bottom of the box body, and the electronic device is placed on the film-sticking assembly, with a screen of the electronic device contacting the film-sticking assembly; and the cover plate covers a back of the electronic device which is a side of the electronic device away from the screen.

Since the film-sticking assembly is arranged at the bottom of the box body and the electronic device is placed on the film-sticking assembly, the electronic device is attached to the tempered film under gravity after the release film is removed. Such a configuration can avoid the movement of the tempered film during the release film is removed, achieving a better film-sticking effect.

In an embodiment, a cotton strip installation groove is formed in the bottom of the box body, a support cotton strip is mounted in the cotton strip installation groove, and a thickness of the support cotton strip is greater than a depth of the cotton strip installation groove.

In an embodiment, a through hole is defined in the cover plate for receiving a camera protrusion area on a back of the electronic device.

In an embodiment, a first drawing hole is defined in the box body, a second drawing hole is defined in the positioning box, and the first drawing hole and the second drawing hole face towards the same direction.

In an embodiment, a pressing block is fixedly arranged on the cover plate. The pressing block can press the electronic device and the film-sticking assembly after the cover plate is closed to discharge bubbles during the film-sticking process.

In an embodiment, adhesive is arranged on a top of a raised part on one side of the box body .

In an embodiment, a seal is arranged on one end of the film-sticking box.

Before the film-sticking box is used, the seal secures the positioning box to the box body to prevent the box body and the cover plate from falling out of the film-sticking box during transportation.

Compared with the prior art, the present disclosure has the following beneficial effects: the film-sticking process is performed completed by placing the film-sticking assembly and the electronic device in the receiving slot of the box body, and the cover plate covers the receiving slot to form a film-sticking space to prevent dust from falling between the protective film and the screen during the film-sticking process, thus achieving a better film-sticking effect. At the same time, the positioning box mounted around the cover plate can prevent the force of pulling the release film during the film-sticking process from affecting the position of the tempered film, which ensures the stability of the film-sticking effect. Furthermore, with the positioning box, the appearance of the film-sticking box is improved. Placing the box body and the cover plate inside the positioning box can avoid damage to the film-sticking box caused by opening the cover plate during transportation.

Compared with the existing technology, the present disclosure has the following beneficial effects:

The film-sticking process is performed and completed by placing the filming assembly and electronic equipment in the receiving slot of the box body, and the cover plate covers the receiving slot to form a filming space to prevent dust from falling between the protective film and the screen during the film-sticking process, thus achieving a better filming effect. At the same time, the present disclosure is equipped with a positioning box on the cover plate to avoid the force of pulling the release film during filming affecting the position of the tempered film, further ensuring the stability of the filming effect. At the same time, after being equipped with a positioning box, the appearance of the filming box is more beautiful. Placing the box body and cover plate inside the positioning box can avoid damage to the filming box caused by opening the cover plate during transportation.

### BRIEF DESCRIPTION OF THE DRAWINGS

FIG. 1 is a structural disassembled view of a film-sticking box for an electronic device of the present disclosure;
FIG. 2 is a schematic view illustrating the combination of an enclosing shell and a box body of the present disclosure;
FIG. 3 is a schematic view illustrating a using state of a positioning box of the present disclosure.

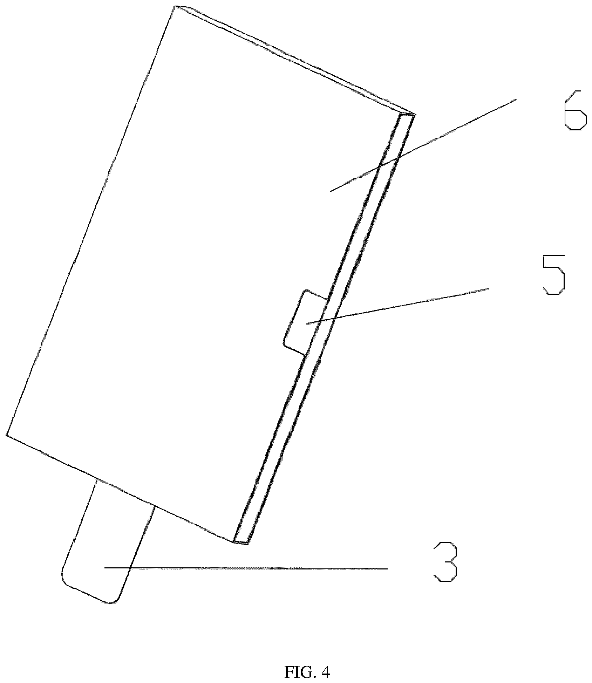

FIG.4 is a structure view illustrating a using state of an enclosing shell of the present disclosure.

Description of reference numerals: 1, box body; 2, electronic device; 3, film-sticking assembly; 31, tempered film; 32, release film; 33, handle; 4, receiving slot; 41, positioning block; 5, enclosing shell; 51, bottom plate; 52, cover plate; 53, connecting plate; 54, pressing block; 6, positioning box; 61, buckle portion; 11, cotton strip installation groove; 12, support cotton strip; 14, first drawing hole; 15, seal.

### DETAILED DESCRIPTION

In order to make the objectives, features, and advantages of the present invention more obvious and understandable, the technical solutions in the embodiments of the present disclosure will be clearly and completely described below in conjunction with the accompanying drawings of the embodiments of the present disclosure. It is apparent that the embodiments described below are only a part of the embodiments of the present disclosure, not all of them. Based on the embodiments of the present disclosure, all other embodiments obtained by those skilled in the art without creative effort fall within the scope of protection of the present disclosure.

### Example 1

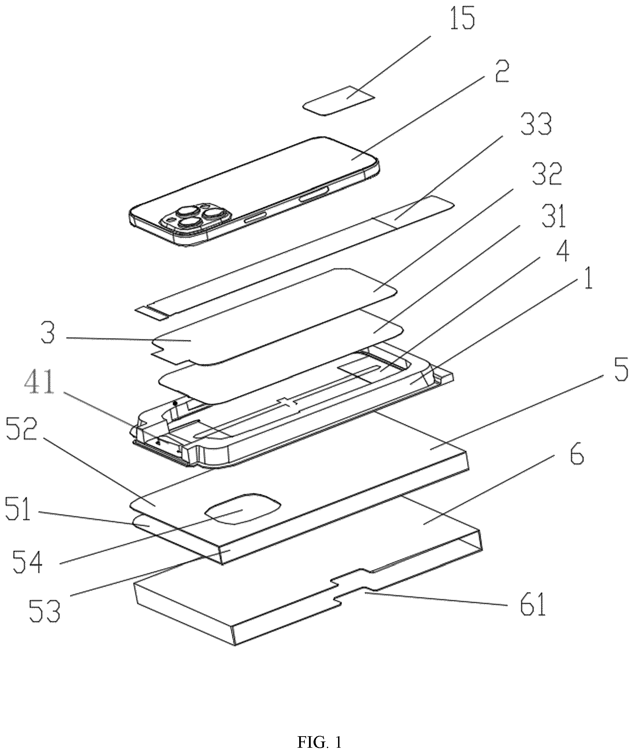

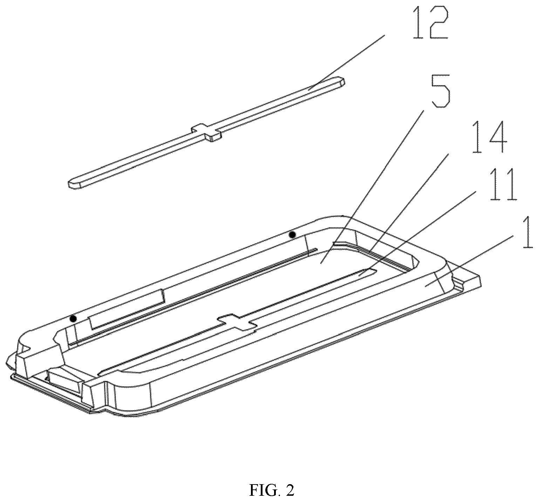

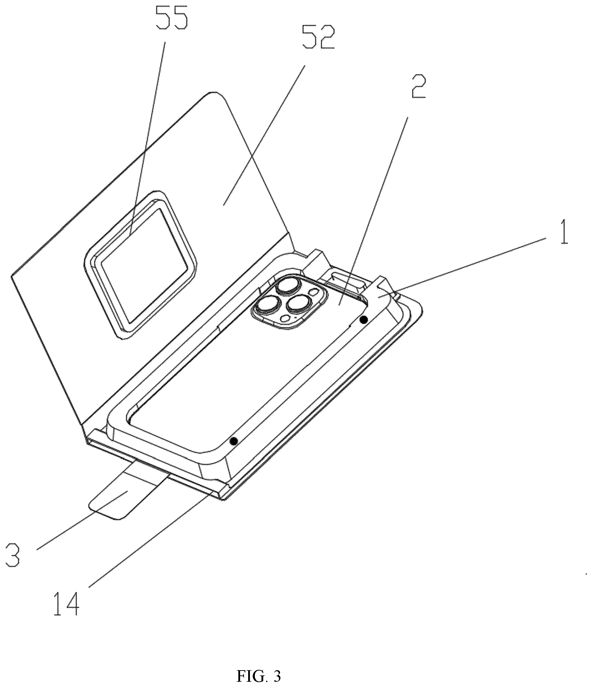

As shown in FIGS. 1 to 3, the present disclosure discloses a film-sticking box for an electronic device. The film-sticking box includes a box body 1. A receiving slot 4 for receiving an electronic device 2 and a film-sticking assembly 3 is formed in the box body 1. A shape of the receiving slot 4 is adapted to a shape of the electronic device 2. The box body 1 is connected to an enclosing shell 5. The enclosing shell 5 includes a bottom plate 51 fixedly connected to a bottom of the box body 1 and a cover plate 52 reversibly connected to the bottom plate 51. In the using state, the cover plate 52 covers the box body 1, the bottom plate 51 is connected to a connecting plate 53, the cover plate 52 is reversibly connected to the bottom plate 51 through the connecting plate 53. A positioning box 6 is mounted around the enclosing shell 5 to fix a position of the cover plate 52 such that the cover plate 52 cannot be opened.

Furthermore, the enclosing shell 5 only has three surfaces which are the bottom plate 51, the cover plate 52, and the connecting plate 53. The cover plate 52 covers the box body 1 without affecting the removal of a release film 32. A positioning block 41 is arranged in the receiving slot 4.

Furthermore, the cover plate 52 and the connecting plate 53 are both rectangular, and a longer side of the cover plate 52 is connected to a longer side of the connecting plate 53, which is stable and facilitates opening and closing the cover plate 52.

Furthermore, the positioning box 6 is a rectangular box with an opening formed by surrounding five box walls. A buckle portion 61 is arranged on the positioning box 6. In some embodiments, the buckle portion 61 is a gap formed in an edge of the opening of the positioning box 6. The buckle portion 61 can facilitate removing the enclosing shell 5 and the box body 1 from the positioning box 6.

Furthermore, the film-sticking assembly 3 includes a tempered film 31, a positioning film, the release film 32, and a handle 33. The release film 32 is removably attached to one side of the tempered film 31. The handle 33 is fixedly connected to the release film 32, and a length of the handle 33 is greater than a length of the release film 32. When the film is attached, the handle 33 extends out of the box body 1 for easy pulling. The positioning film is removably attached to the other side of the tempered film 31. At least one positioning hole is defined in the positioning film. The tempered film 31 can be accurately placed in the box body 1 and prevented from being moved by inserting the positioning block 41 into the positioning hole.

Furthermore, the film-sticking assembly 3 is located at the bottom of the box body 1, and the electronic device 2 is placed on the film-sticking assembly 3. A screen of the electronic device 2 is attached to the film-sticking assembly 3, and the cover plate 52 covers a back of the electronic device 2. The back of the electronic device 2 is the side of the electronic device 2 away from the screen.

Furthermore, a cotton strip installation groove 11 is formed in the bottom of the box body 1, and a support cotton strip 12 is mounted in the cotton strip installation groove 11. A thickness of the support cotton strip 12 is greater than a depth of the cotton strip installation groove 11. The support cotton strip 12 protrudes from a bottom surface of the box body 1 and abuts against the film-sticking assembly 3. During the film-sticking process, the support cotton strip 12 squeezes the film-sticking assembly 3 to discharge bubbles between the tempered film 31 and the screen of the electronic device 2, resulting in a better film-sticking effect.

Furthermore, a through hole is defined in the cover plate 52 for receiving a camera protrusion area on the back of the electronic device 2.

Furthermore, a first drawing hole 14 is defined in the box body 1 and a second drawing hole is defined in the positioning box 6. The first drawing hole 14 and the second drawing hole face towards the same direction.

Furthermore, a pressing block 54 is fixedly arranged on the cover plate 52 and engages with the support cotton strip 12 arranged on the bottom surface of the box body 1 to press the tempered film 31 and the electronic device 2 from opposite directions, resulting in a better air bubble removal effect.

Furthermore, a seal 15 is arranged on one end of the film-sticking box. Before the film-sticking box is used, the seal 15 secures the positioning box 6 to the box body 1 to prevent the box body 1 and the cover plate 52 from falling out of the film-sticking box during transportation.

In the present disclosure, the film-sticking process is performed and completed by placing the film-sticking assembly 3 and the electronic device 2 in the receiving slot 4 formed in the box body 1, and the cover plate 52 covers the receiving slot 4 to form a film-sticking space to prevent dust from falling into the space between the protective film and the screen during the film-sticking process, thereby achieving a better film-sticking effect. At the same time, the positioning box 6 is mounted around the cover plate 52 to prevent the force of pulling the release film 32 from affecting the position of the tempered film 31 during the film-sticking process, which further ensures the stability of the film-sticking effect. Furthermore, with the positioning box 6, the appearance of the film-sticking box is improved. In addition, by placing the box body 1 and the cover plate 52 in the positioning box 6, damage to the film-sticking box caused by opening the cover plate 52 can be avoided during transportation.

### Example 2

The present disclosure discloses a film-sticking box for an electronic device, which includes a box body 1. A receiving slot is formed in the box body 1 for receiving an electronic device 2 and a film-sticking assembly 3. Adhesive is arranged on a top of a raised part on one side of the box body 1. A shape of the receiving slot 4 is adapted to a shape of the electronic device 2. The box body 1 is connected to an enclosing shell 5, which includes a bottom plate 51 fixedly connected to the bottom of the box body 1 and a cover plate 52 reversibly connected to the bottom plate 51. In the using state, the cover plate 52 covers the box body 1. The bottom plate 51 is connected to a connecting plate 53, and the cover plate 52 is reversibly connected to the bottom plate 51 through the connecting plate 53.

Furthermore, the enclosing shell 5 only has three surfaces which are the bottom plate 51, the cover plate 52, and the connecting plate 53. The cover plate 52 covers the box body 1 without affecting the removal of a release film 32. A positioning block 41 is arranged in the receiving slot 4.

Furthermore, the cover plate 52 and the connecting plate 53 are both rectangular, and a longer side of the cover plate 52 is connected to a longer side of the connecting plate 53, which is stable and facilitates opening and closing the cover plate 52.

Furthermore, the film-sticking assembly 3 includes a tempered film 31, a positioning film, the release film 32, and a handle 33. The release film 32 is removably attached to one side of the tempered film 31. The handle 33 is fixedly attached to the release film 32, and a length of the handle 33 is greater than a length of the release film 32. When the film is attached, the handle 33 extends out of the box body 1 for easy pulling. The positioning film is removably attached to the other side of the tempered film 31. At least one positioning hole is defined in the positioning film. The tempered film 31 can be accurately placed in the box body 1 and prevented from being moved by inserting the positioning block 41 into the positioning hole.

Furthermore, the film-sticking assembly 3 is located at the bottom of the box body 1, and the electronic device 2 is placed on the film-sticking assembly 3. The screen of the electronic device 2 is attached to the film-sticking assembly 3, and the cover plate 52 covers a back of the electronic device 2. The back of the electronic device 2 is the side of the electronic device 2 away from the screen.

Furthermore, a cotton strip installation groove 11 is formed in the bottom of the box body 1 and a support cotton strip 12 is mounted in the cotton strip installation groove 11. A thickness of the support cotton strip 12 is greater than a depth of the cotton strip installation groove 11. The support cotton strip 12 protrudes from the bottom surface of the box body 1 and abuts against the film-sticking assembly 3. During the film-sticking process, the support cotton strip 12 squeezes the film-sticking assembly 3 to discharge bubbles between the tempered film 31 and the screen of the electronic device 2, resulting in a better film-sticking effect.

Furthermore, a through hole is defined in the cover plate 52 for receiving a camera protrusion area on the back of the electronic device 2.

Furthermore, a first drawing hole 14 is defined in the box body 1 and a second drawing hole is defined in the positioning pocket 6 has. The first drawing hole 14 and the second drawing hole face towards the same direction.

Furthermore, a pressing block 54 is fixedly arranged on the cover plate 52 and engages with the support cotton strip 12 arranged on the bottom surface of the box body 1 to press the tempered film 31 and the electronic device 2 from opposite directions, resulting in a better air bubble removal effect.

Furthermore, a seal 15 is arranged on one end of the film-sticking box. Before the film-sticking box is used, the seal 15 secures the positioning box 6 to the box body 1, preventing the box body 1 and the cover plate 52 from falling out of the film-sticking box during transportation.

In the present disclosure, the film-sticking process is performed and completed by placing the film-sticking assembly 3 and the electronic device 2 in the receiving slot 4 in the box body 1, and the cover plate 52 covers the receiving slot 4 to form a film-sticking space to prevent dust from falling into a space between the protective film and the screen during the film-sticking process, thus achieving a better film-sticking effect. At the same time, with the adhesive arranged on the top of the raised part of the box body 1, the cover plate 52 can be firmly attached when the cover plate 52 is closed to cover the box body 1, which prevents the force of pulling the release film 32 from affecting the cover plate 52 and thus prevents the cover plate 52 from affecting the film-sticking effect when the cover plate 52 moves or flips.

It is understandable that the above-mentioned technical features may be used in any combination without limitation. The above descriptions are only the embodiments of the present disclosure, which do not limit the scope of the present disclosure. Any equivalent structure or equivalent process transformation made by using the content of the description and drawings of the present disclosure, or directly or indirectly applied to other related technologies in the same way, all fields are included in the scope of patent protection of the present disclosure.

## Claims

1. A film-sticking box for an electronic device, comprising a box body (1) forming a receiving slot (4) for receiving an electronic device (2) and a film-sticking assembly (3), and a shape of the receiving slot (4) being adapted to a shape of the electronic device (2); wherein the box body (1) is connected to an enclosing shell (5), the enclosing shell (5) comprises a bottom plate (51) fixedly connected to a bottom of the box body (1) and a cover plate (52) reversibly connected to the bottom plate (51); the bottom plate (51) is connected to a connecting plate (53), and the cover plate (52) is reversibly connected to the bottom plate (51) through the connecting plate (53), and a positioning box (6) is mounted around the enclosing shell (5).

2. The film-sticking box according to claim 1, wherein the enclosing shell (5) comprises three surfaces which are the bottom plate (51), the cover plate (52), and the connecting plate (53); the cover plate (52) covers the box body (1), and a positioning block (41) is arranged in the receiving slot (4).

3. The film-sticking box according to claim 2, wherein the positioning box (6) is a rectangular box with one opening formed by surrounding at least one box wall, and a buckle portion (61) is arranged in the positioning box (6) and is a gap formed in an edge of the opening of the positioning box (6).

4. The film-sticking box according to claim 1, wherein the film-sticking assembly (3) comprises a tempered film (31), a positioning film, a release film (32), and a handle (33), the release film (32) is removably attached to one side of the tempered film (31), the handle (33) is fixedly connected to the release film (32), a length of the handle (33) is greater than a length of the release film (32), the positioning film is removably attached to the other side of the tempered film (31), and at least one positioning hole is defined in the positioning film.

5. The film-sticking box according to claim 4, wherein the film-sticking assembly (3) is arranged at the bottom of the box body (1), and the electronic device (2) is placed on the film-sticking assembly (3), with a screen of the electronic device (2) contacting the film-sticking assembly (3); and the cover plate (52) covers a back of the electronic device (2) which is a side of the electronic device (2) away from the screen.

6. The film-sticking box according to claim 1, wherein a cotton strip installation groove (11) is formed in the bottom of the box body (1), a support cotton strip (12) is mounted in the cotton strip installation groove (11), and a thickness of the support cotton strip (12) is greater than a depth of the cotton strip installation groove (11).

7. The film-sticking box according to claim 1, wherein a through hole is defined in the cover plate (52) for receiving a camera protrusion area on a back of the electronic device (2).

8. The film-sticking box according to claim 1, wherein a first drawing hole (14) is defined in the box body (1), a second drawing hole is defined in the positioning box (6), and the first drawing hole (14) and the second drawing hole face towards the same direction.

9. The film-sticking box according to claim 1, wherein a pressing block (54) is fixedly arranged on the cover plate (52).

10. The film-sticking box according to claim 1,wherein adhesive is arranged on a top of a raised part on one side of the box body (1).
